# EUROPÄISCHE PATENTANMELDUNG

(11) **EP 4 061 089 A1**
(43) Veröffentlichungstag der Anmeldung: **21.09.2022**
(21) Anmeldenummer: 21170726.0
(22) Anmeldetag: 27.04.2021
(51) Int. Cl.: H04W 76/14, H04W 8/00, H04W 4/80, H04W 84/12

(54) **VERFAHREN UND SYSTEM ZUM ERSTELLEN EINES VOM ZENTRALNETZ UNABHÄNGIGEN NETZES ZWISCHEN ZWEI ODER MEHR MOBILEN VORRICHTUNGEN**

(30) Priorität: 15.03.2021 EP 21162551
(71) Anmelder: Schick, Bodo Michael, 10965 Berlin (DE)
(72) Erfinder: Schick, Bodo Michael, 10965 Berlin (DE)
(74) Vertreter: Hertin und Partner Rechts- und Patentanwälte PartG mbB

(57) **Zusammenfassung**

Die Erfindung betrifft ein Verfahren zum Aufbau einer Kommunikationsverbindung zwischen mindestens zwei mobilen Vorrichtungen, wobei ein eigenes Netz entsteht, welches vom Zentralnetz unabhängig ist. Die Erfindung betrifft außerdem ein System zum Aufbau einer solchen Kommunikationsverbindung.

## Beschreibung

### Stand der Technik

Smartphones und Tablets oder Computer sind technische Hochleistungsgeräte die mehr und mehr Funktionen im Alltag aller Menschen übernehmen. Fast alle Menschen der zivilisierten Welt nutzen zu mindestens Smartphones. Die bisherige Nutzung erfolgte überwiegend durch ein zentrales Netz. Die Möglichkeit zur dezentralen Netzbildung ist bereits durch den technischen Fortschritt gegeben, aber bisher nicht zur Anwendung gebracht worden.

Die bisherige Technik der Mobilfunknutzung beruht auf einem zentralen Mobilfunknetz, obwohl die Technik für eine eigentlich unabhängige Nutzung vom zentralen Netz durch z.B. Bluetooth, WiFi, airdrop etc. durchaus gegeben ist. Ein tatsächlich kleines Netzwerk 1 zu 1 oder größer wird aber nicht aufgebaut, sondern diese Funktionen beschränken sich lediglich auf den unmittelbaren einmaligen/mehrmaligen Austausch von Daten, ohne tatsächlich ein Netzwerk mit gegenseitigem Datenaustausch oder auf Dauer herzustellen.

Alle Daten über ein zentrales Netz laufen zu lassen, hat historische Ursachen und war in der Vergangenheit für die Abrechnung von Kosten existenziell. Neue technische und abrechnungsrechtliche Möglichkeiten (Flatrate) machen dies aber nicht mehr unumgänglich. Gerade die Nutzung von z.B. "Schwarmintelligenz" macht es notwendig, solch einen "Schwarm" unabhängig von einem zentralen Netz agieren zu lassen.

Die ausschließliche Nutzung eines zentralen Mobilnetzes hat entscheidende Nachteile gegenüber einem örtlichen, zeitlichen, personifizierten oder funktionsbasierten Netz. So besteht dauerhaft die Abhängigkeit von einem Netzbetreiber, wobei verschiede Smartphone oder andere Endgerät Nutzer ggf. abhängig von unterschiedlichen Netzbetreibern sind. Somit entstehen unterschiedliche Übertragungsraten, Zeiten und Datengeschwindigkeiten und Volumina. Bisher lassen sich weder zwei noch mehrere Smartphones oder andere mobile Endgeräte, oder deren Funktionen über das zentrale Mobilfunknetz exakt synchronisieren, was dazu führt, dass viele möglichen Anwendungen nicht umsetzbar sind. Weiterhin können bestimmte Daten in einem dezentralen Netz besser geschützt werden und laufen ggf. nicht über das zentrale Netz, was unterschiedliche Vorteile mit sich bringt. Dadurch kann z. B. Datenautonomie für bestimmte Bereiche hergestellt werden, da die Daten nicht zentral, sondern bei den Nutzern des neu geschaffenen Netzes abgelegt werden. Außerdem wäre ein dezentrales Netz unabhängig, beispielsweise bei Ausfall oder Störungen im zentralen Netz.

Es besteht daher der Bedarf, die bereits vorhandenen technischen Möglichkeiten so zu nutzen, dass sich kleinere, temporäre, vom zentralen Mobilfunknetz unabhängige Netze bilden können. Es war die Aufgabe der Erfindung ein Verfahren und ein System zur Bildung solcher Netze bereitzustellen, ohne dass hierzu zusätzliche technische Geräte notwendig wären.

### Beschreibung der Erfindung

Die der Erfindung zugrunde liegende Aufgabe wird gelöst durch die unabhängigen Ansprüche. Vorteilhafte Ausführungsformen finden sich in den abhängigen Ansprüchen.

In einer ersten bevorzugten Ausführungsform betrifft die Erfindung ein Verfahren zum Aufbau einer Kommunikationsverbindung zwischen mindestens zwei mobilen Vorrichtungen, wobei
a) eine erste mobile Vorrichtung ein Host ist und ein erstes Funksignal erzeugt, wobei das Funksignal einen ersten räumlichen Empfängerbereich generiert, der über eine erste Funktechnik gebildet wird;
b) eine zweite mobile Vorrichtung ein Teilnehmer ist und sich innerhalb des Empfängerbereichs des ersten Funksignals befindet, wobei die zweite mobile Vorrichtung das Funksignal detektiert;
c) die zweite mobile Vorrichtung eine manuelle oder automatische Anfrage zum Verbindungsaufbau an die erste mobile Vorrichtung übermittelt;
d) die erste mobile Vorrichtung die Anfrage manuell oder automatisch bestätigt, sodass sich eine erste Kommunikationsverbindung über das Funksignal zwischen der ersten und der zweiten mobilen Vorrichtung einstellt;
e) die erste mobile Vorrichtung im Zuge der ersten Kommunikationsverbindung eine Berechtigung erhält, eigene Daten mit der zweiten mobilen Vorrichtung über die erste Kommunikationsverbindung zu teilen und/oder anwendungsbezogene Steuerbefehle an die zweite mobile Vorrichtung über die erste Kommunikationsverbindung zu übermitteln.

Die Erfindung betrifft somit eine Erweiterung der bisherigen allgemeinen Funktionen von mobilen Vorrichtungen um die Möglichkeit, vom Zentralnetz unabhängige, lokale, temporäre, personifizierte/gerätespezifische oder funktionsbasierte Netzwerke zu schaffen.

Ein wesentlicher Vorteil der Erfindung ist somit, dass durch den Verbindungsaufbau zwischen den zwei oder mehr Vorrichtungen ein Netz entsteht, dass als vom Zentralnetz unabhängiges eigenes Netz fungiert. Dabei können auch mehrere Endgeräte miteinander verbunden werden, sodass nicht jedes Endgerät zwangsläufig eine eigene Verbindung zum ursprünglichen Host-Gerät (erste mobile Vorrichtung) aufbauen muss. So kann die zweite mobile Vorrichtung selbst eine Anfrage an weitere mobile Vorrichtungen verschicken und so selbst zum führenden Endgerät werden oder aber die Anfragen der ersten mobilen Vorrichtung weiterleiten. Es ist aber auch möglich, dass alle Teilnehmer eine eigne Verbindung zur ersten mobile Vorrichtung aufbauen. Diese Variante eignet sich in erster Linie bei kleineren Netzen mit wenigen Teilnehmern.

Es ist bevorzugt möglich, dass alle Teilnehmer untereinander verbunden sind. Genauso ist es möglich, dass nicht zwischen allen Teilnehmern eine eigene Verbindung besteht, sondern jede Vorrichtung nur mit bestimmten anderen Vorrichtungen verbunden sind, die dann ggf. auch mit anderen Vorrichtungen in Verbindung stehen.

Das Teilen von Daten bzw. die Steuerbefehle in Schritt e) erfolgen bevorzugt nach Anfrage. Diese Anfrage kann sowohl manuell als auch automatisch erfolgen, bzw. je nach Anwendungsgebiet voreingestellt sein. Die Annahme der Anfrage kann ebenfalls automatisch oder manuell erfolgen. Die einzelnen Nutzer können beispielsweise Voreinstellungen zu der Art der Daten oder Steuerbefehle, die sie empfangen und/oder teilen machen oder auch bezüglich des Datenvolumens.

Es ist bevorzugt, dass die führende mobile Vorrichtung ein Netz aufbaut, indem sie zunächst ihre Bereitschaft zum Netzaufbau signalisiert und dies mit einer sogenannte Connect Anfrage an eine beispielsweise durch Bluetooth oder WiFi im definierten Umkreis befindliche mobile weitere Vorrichtung geschieht. Diese Anfrage kann manuell oder automatische erfolgen. Die angefragte(n) weiteren mobilen Vorrichtungen können dann die Anfrage entweder manuell oder automatisch bestätigen und die Kommunikationsverbindung wird hergestellt, wenn die führende Vorrichtung dies bestätigt. Durch den Aufbau des Netzes kann nun die führende Vorrichtung durch Steuerbefehle auf die verbundenen Vorrichtungen beispielsweise eine Synchronisation von Daten ermöglichen.

Es ist außerdem bevorzugt, dass das Verfahren dadurch gekennzeichnet ist, dass bei einer niedrigen Verbindungsqualität der ersten Kommunikationsverbindung und/oder in Abhängigkeit einer zu übertragenen Datengröße, die erste mobile Vorrichtung automatisiert ein zweites Funksignal erzeugt, wobei das zweite Funksignal über eine zweite Funktechnik gebildet wird und einen zweiten räumlichen Empfängerbereich erzeugt,
wobei
▪ die zweite mobile Vorrichtung sich innerhalb des Empfängerbereichs des zweiten Funksignals befindet, wobei die zweite mobile Vorrichtung das zweite Funksignal detektiert;
▪ die zweite mobile Vorrichtung eine automatische Anfrage zum Verbindungsaufbau an die erste mobile Vorrichtung übermittelt;
▪ die erste mobile Vorrichtung die Anfrage automatisch bestätigt, sodass sich eine zweite Kommunikationsverbindung zwischen der ersten und zweiten mobilen Vorrichtung einstellt;
▪ die erste mobile Vorrichtung eine Berechtigung im Zuge der zweiten Kommunikationsverbindung erhält, eigene Daten mit der zweiten mobilen Vorrichtung über die zweite Kommunikationsverbindung zu teilen und/oder anwendungsbezogene Steuerbefehle an die zweite mobile Vorrichtung über die zweite Kommunikationsverbindung zu übermitteln.

Diese Ausführungsform ist auch um weitere Funksignale oder Funktechniken erweiterbar. Es können also unterschiedliche Funktechnologien zum Einsatz kommen. So kann z.B. das erste Funksignal über Bluetooth generiert werden und sofern zwei mobile Vorrichtungen einen bestimmten Abstand überschreiten oder eine große Datenmenge übertragen werden soll, wird eine andere Funktechnologie, z.B. WLAN für die Übertragung verwendet. Bei kleinen Entfernungen und kleineren Datenmengen wird hingegen Bluetooth verwendet, welches in diesem Beispiel weniger Energie im Vergleich zur WLAN-Übertragung benötigt. Hier sind auch alle anderen Technologien und Kombinationen möglich, wobei ein Fachmann in der Lage ist eine geeignete Kombination zu wählen, ohne dabei selbst erfinderisch tätig zu werden.

Durch diese Ausführungsform gewinnt das erfindungsgemäße Verfahren zusätzlich an Flexibilität und wird weniger störungsanfällig.

Weiterhin bevorzugt ist, dass bei einer niedrigen Verbindungsqualität der ersten und/oder zweiten Kommunikationsverbindung, eine dritte Kommunikationsverbindung zwischen der ersten und zweiten mobilen Vorrichtung über ein zentrales Netz eines Netzbetreibers oder eine andere zu diesem Zweck geeignete Funktechnik hergestellt wird.

Bevorzugt wird für die Erzeugung eines Funksignals eine Funktechnik verwendet, ausgewählt aus der Gruppe umfassend Bluetooth, WLAN, Z-Wave, ZigBee, Mesh, DECT, ULE. Grundsätzlich ist jede Funktechnik geeignet, die in der Lage ist, eine Kommunikationsverbindung zum Datentransfer zwischen zwei mobilen Vorrichtungen herzustellen. Andere, insbesondere auch zukünftige Technologien, können ebenfalls verwendet werden. Ein Fachmann ist in der Lage eine geeignete Funktechnik oder ein geeignetes Funksignal auszuwählen ohne dabei selbst erfinderisch tätig zu werden.

Die bereits vorhandenen oder sich entwickelnden Zentralnetz unabhängigen Funktechniken zur Verbindung (Bluetooth, WLAN, Z-Wave, ZigBee, Mesh, DECT, ULE etc.), aber auch das Zentralnetz selbst, erlauben die Bildung von erfindungsgemäßen Netzen, die auch als **Schick Connect** Netze bezeichnet werden. Diese Netze sind nach außen geschlossen und nur einem begrenzten Nutzerkreis zugänglich. Dabei nutzt die mobile Vorrichtung, welches eine Kommunikationsverbindung im Sinne der Erfindung (auch **Schick Connect** genannt) aufbauen möchte bevorzugt die in ihm verbauten Techniken abhängig von der Reichweite und dem jeweiligen Zweck.

Auch bevorzugt ist, dass die zweite mobile Vorrichtung über das erste Funksignal in einer ersten Kommunikationsverbindung mit der ersten mobilen Vorrichtung steht und eine dritte mobile Vorrichtung ein weiterer Teilnehmer ist und über das zweite Funksignal mit der ersten und/oder zweiten mobilen Vorrichtung in einer zweiten und ggf. dritten Kommunikationsverbindung steht.

Es ist außerdem bevorzugt, dass die erste mobile Vorrichtung ortsabhängige, zeitabhängige, funktionsabhängige und/oder personen- oder geräteabhängige Randbedingungen für die erste, zweite und/oder dritte Kommunikationsverbindung erzeugt.

Weiterhin bevorzugt ist, dass die erste mobile Vorrichtung einen Abbruch der ersten, zweiten und/oder einer weiteren Kommunikationsverbindung initiiert und/oder eine Anfrage für einen Verbindungsaufbau ablehnt, sofern die Randbedingungen nicht eingehalten bzw. überschritten werden.

Es ist bevorzugt, dass die erste mobile Vorrichtung vorgeben kann, ob die Kommunikationsverbindung zeitlich befristet, entfernungsabhängig und/oder permanent, personen- oder gerätebezogen oder funktionsbezogen sein soll.

Eine zeitliche Befristung erfolgt bevorzugt durch die Eingabe von Zeitfenstern, welche durch die Nutzer möglich ist. D.h. sowohl die Host Vorrichtung als auch die einzelnen Teilnehmer können eine zeitliche Befristung einrichten. Des Weiteren ist eine personelle und/oder gerätebezogene Begrenzung möglich, indem Nutzer oder Geräte mit ihrem Namen hinzugefügt werden. Diese Begrenzung erfolgt bevorzugt durch das führende Endgerät (Host). Eine räumliche Begrenzung ist möglich, in dem z.B. ein Radius oder ein Gebiet durch den Nutzer definiert wird. Die erfolgt bevorzugt durch das führende Endgerät und kann z.B. durch die Eingabe von PLZ, Ortsnamen oder GPS erfolgen. Die funktionsbezogene Begrenzung wird durch den Zweck der gemeinsamen Nutzung des neu geschaffenen Netzes definiert. Alle vier Begrenzungen können sich auch ggf. überlappen.

Es ist besonders bevorzugt, dass die Tiefe und Zeitdauer der Verbundenheit der mobilen Vorrichtungen von jedem Nutzer festgelegt bzw. limitiert werden können.

Außerdem bevorzugt handelt es sich um eine mobile Vorrichtung ausgesucht aus der Gruppe umfassend Telekommunikationsendgerät, bevorzugt Smartphone, Laptop-PC, Tablet-Computer und Videospielkonsole, funkfähiges Multimediagerät, TV.

Es ist bevorzugt, dass die erfindungsgemäße Funktion im Betriebssystem der mobilen Vorrichtung, z.B. dem Smartphone, freigeschaltet und/oder eingebaut ist.

Die erfindungsgemäße Funktion kann aber auch über eine App oder eine Software integriert werden. Es ist auch möglich, dass einzelne Anwendungen diese Funktion nutzen und selbständige Netze herstellen. Dies kann die Nutzungsmöglichkeiten der Vorrichtung insofern einschränken, dass diese Netze dann immer nur für eine Funktion nutzbar sind und funktionsabhängig programmiert werden müssen.

In einer weiteren bevorzugten Ausführungsform betrifft die Erfindung ein System zum Aufbau einer Kommunikationsverbindung zwischen mindestens zwei mobilen Vorrichtungen umfassend:
eine erste und eine zweite mobile Vorrichtung, wobei
   a) die erste mobile Vorrichtung dazu konfiguriert ist,
      ▪ ein erstes Funksignal zu erzeugen, wobei das Funksignal einen ersten räumlichen Empfängerbereich und eine erste Funktechnik aufweist;
      ▪ eine Anfrage für einen Verbindungaufbau durch die zweite mobile Vorrichtung manuell oder automatisch zu bestätigen, sodass sich eine erste Kommunikationsverbindung zwischen der ersten und der zweiten mobilen Vorrichtung einstellen kann;
      ▪ eigene Daten mit der zweiten mobilen Vorrichtung nach einem Erhalt einer Berechtigung im Zuge der ersten Kommunikationsverbindung zu teilen und/oder anwendungsbezogene Steuerbefehle an die zweite mobile Vorrichtung über die erste Kommunikationsverbindung zu übermitteln;
   b) die zweite mobile Vorrichtung innerhalb des Empfängerbereichs des ersten Funksignals positioniert ist und dazu konfiguriert ist,
      ▪ das erste Funksignal zu detektieren;
      ▪ eine manuelle oder automatische Anfrage für einen Verbindungsaufbau an die erste mobile Vorrichtung zu übermitteln.

Es ist dabei bevorzugt, dass dabei die erste mobile Vorrichtung dazu konfiguriert ist, bei einer niedrigen Verbindungsqualität der ersten Kommunikationsverbindung und/oder in Abhängigkeit einer zu übertragenen Datengröße automatisiert ein zweites Funksignal zu erzeugen, wobei das zweite Funksignal eine zweite Funktechnik aufweist und einen zweiten räumlichen Empfängerbereich erzeugt und die zweite mobile Vorrichtung dazu konfiguriert ist, das zweite Funksignal zu detektieren, sodass eine zweite Kommunikationsverbindung zwischen der ersten und der zweiten mobilen Vorrichtung ermöglicht wird.

Weiter bevorzugt ist das System, wobei die erste mobile Vorrichtung dazu konfiguriert ist, ortsabhängige, zeitabhängige, funktionsabhängige und/oder personenabhängige Randbedingungen für eine Kommunikationsverbindung zu erzeugen.

Auch bevorzugt ist das System, wobei die erste mobile Vorrichtung dazu konfiguriert ist, einen Abbruch einer Kommunikationsverbindung zu initiieren und/oder eine Anfrage für einen Verbindungsaufbau abzulehnen, sofern die Randbedingungen nicht eingehalten werden.

Es ist weiterhin bevorzugt, dass auf der ersten und zweiten mobilen Vorrichtung ein Computerprogrammprodukt installiert vorliegt, welches dazu eingerichtet ist, manuelle Eingaben auf der ersten Vorrichtung in für die zweite Vorrichtung kompatible Steuerungsbefehle zu konvertieren und eine Übertragung der Steuerungsbefehle durch die erste Vorrichtung an die zweite Vorrichtung zu initiieren.

Bevorzugt ist das Computerprogrammprodukt dazu eingerichtet, aufgebaute Kommunikationsverbindungen anhand von Algorithmen, bevorzugt Algorithmen der künstlichen Intelligenz, zu analysieren und zu beurteilen, ob die Randbedingungen eingehalten werden und die gewünschten Funktionen in dem neu geschaffenen Netz auszuführen.

Die Anwendungsmöglichkeiten des erfindungsgemäßen Verfahrens und/oder Systems sind vielfältig. So können z. B. zwei oder mehrere mobile Vorrichtungen, bevorzugt Smartphones, auf diese Weise gemeinsam zum gleichen Zeitpunkt, synchron, die gleiche Musik hören und z.B. gemeinsam zur Verbesserung des Klangbildes ihre fest eingebauten Lautsprecher anmachen und ohne Zusatzlautsprecher ein größeres, besseres Klangvolumen erreichen. Die Musikdateien werden dabei nicht über das zentrale Netz geteilt und auch nicht über Apps die einen zentrales Netz oder Server verwenden. Die Kommunikation findet ausschließlich über die Verbindung zwischen den einzelnen mobilen Vorrichtungen statt.

Erweiterungen bezüglich der Anzahl an Endgeräten und Verbindungen aber auch in Bezug auf die geteilten Daten und Anwendungen sind unkompliziert möglich.

Durch die Erfindung sind beispielsweise spontane Konzerte oder Partys ohne Equipment mit wenig Aufwand umsetzbar. Sowohl die Lautsprecher der connecteten Smartphones als auch die Taschenlampen und Displays könnten über das führende Smartphone gesteuert werden und damit sowohl Klanginstallationen als auch Lichtinstallationen zulassen.

Es ist weiterhin bevorzugt, dass die führende Vorrichtung die Funktion eines Equalizers übernimmt und so unterschiedliche Befehle für Ton und/oder Lichtsignale an die beteiligten Endgeräte sendet.

Eine andere bevorzugte Anwendungsmöglichkeit stellt die Verwendung im Straßenverkehr dar. So können Menschen und Fahrzeuge sich gegenseitig auf Gefahrensituationen oder Behinderungen hinweisen, wenn sie sich begegnen und ein Verbindungsaufbau stattgefunden hat. Auch für das automatische Fahren im Verkehr bringt das erfindungsgemäße Verfahren Vorteile mit sich. Vorfälle und Ereignisse können so jeweils netzunabhängig zwischen den verbundenen mobilen Vorrichtungen auf einfache Weise ausgetauscht werden.

Auch im Personennahverkehr kann das erfindungsgemäße Verfahren vorteilhaft eingesetzt werden. So kann z.B. die Auslastung im Personennahverkehr besser gesteuert werden, wenn das lokale Netz der Benutzer z.B. automatisch eine Überfüllung in Bus und Bahn meldet.

Eine weiteres bevorzugtes Anwendungsfeld stellen Abstimmungsverfahren dar. Durch das erfindungsgemäße Verfahren können Abstimmungsergebnisse oder Entscheidungen in einer Gruppe schnell und einfach herbeigeführt werden. Dabei können die Abstimmungen anonym erfolgen und/oder beweissicher dokumentiert werden.

Z.B. lassen sich in Kombination mit der Blockchain Technologie durch vom Zentralnetz unabhängige Netze, fälschungssicher Abstimmungen vornehmen, da das unabhängige Netz und seine Teilnehmer die Abstimmungsergebnisse fälschungssicher abspeichern und für alle damit überprüfbar aufbewahren. Das erfindungsgemäße Verfahren kann somit zu mehr Sicherheit auf diesem Gebiet beitragen.

Ein Vorteil der Erfindung ist, dass dadurch bestimmte technische Geräte nicht mehr benötigt werden und es somit weniger zusätzlicher Technik im Alltag bedarf. Denn bestimmte technische Aufgaben lassen sich durch das erfindungsgemäße Verfahren einfach auf die verwendete mobile Vorrichtung, z.B. das Smartphone, als einen Alltagsgegenstand übertragen. Durch das Verfahren kann z.B. eine Gegensprechanlage, ein Babyphone oder auch ein Walkie Talkie ersetzt werden. Dabei ersetzten die mobilen Vorrichtungen diese Geräte und die Kommunikation findet ausschließlich über das eigens gebildete Netz zwischen den Vorrichtungen statt. Auch Zugangsberechtigungen für Schlösser können über das erfindungsgemäße Verfahren gesteuert werden. Es entfällt ein höherer Installationsaufwand und Kosten können durch die Vermeidung zusätzlicher Anschaffungen eingespart werden.

Auch in der industriellen Nutzung kann das erfindungsgemäße Verfahren auf vielfältige Weise vorteilhaft eingesetzt werden. So lassen sich mit der Erfindung der zentralnetzunabhängigen Netze, in Produktionsbereichen, unabhängige Netze bilden, die bestimmte Steuerungsaufgaben im Unternehmen übernehmen, wobei sich diese Netze gemäß ihrer Funktion und Aufgabenstellung auch gegenseitig überlagern können.

Bei einer Integration in das Betriebssystem der mobilen Vorrichtungen, z.B. Smartphones oder Computer, sind unzählige Nutzungen möglich, die auf ein örtlich- oder zeitlich- oder Personenoder Gerätebegrenztes oder funktionsbegrenztes Netzwerk beruhen.

Alle Vorteile und bevorzugten Ausführungsformen, die für das Verfahren beschrieben wurden, gelten gleichermaßen für das System und umgekehrt.

### Figurenbeschreibung und Beispiel

Anhand von Figuren und Beispielen wird die Erfindung illustriert, ohne dabei auf diese beschränkt zu sein.

### Beispiel 1

Ein führendes Smartphone schickt entweder eine manuelle oder automatische Anfrage zum Connect an in Frage kommende Smartphones in der Umgebung. Das oder die angefragten Smartphones können dann die Anfrage entweder manuell oder automatisch bestätigen und die Verbindung wird hergestellt. Dabei kann die Verbindung zeitlich befristet, entfernungsabhängig oder permanent, Personen oder Geräte bezogen oder funktionsbezogen sein. Bei Bestätigung entsteht ein Netz zwischen den verbundenen Smartphones. Die Tiefe und Zeitdauer der Verbundenheit können von jedem Nutzer festgelegt werden.

In einer bevorzugten Ausführungsform der Erfindung wird Musik über die Verbindung zwischen mehreren Smartphones geteilt. Dafür baut das führende Smartphone ein Netz auf, indem es zunächst seine Bereitschaft zum Netzaufbau signalisiert, nämlich mit einer sogenannte Connect Anfrage an ein in diesem Fall durch Bluetooth oder WiFi im definierten Umkreis befindliches Smartphone. Diese Anfrage kann manuell oder automatische erfolgen. Das oder die angefragten Smartphones können dann die Anfrage entweder manuell oder automatisch bestätigen und die Kommunikationsverbindung wird hergestellt, wenn das führende Smartphone dies bestätigt. Durch den Aufbau des Netzes kann nun das führende Smartphone durch Steuerbefehle auf das connectete Smartphone eine Synchronisation des Musikhörens, entweder durch Kopfhörer oder Lautsprecher auf beiden (oder mehreren) Smartphones ermöglichen.

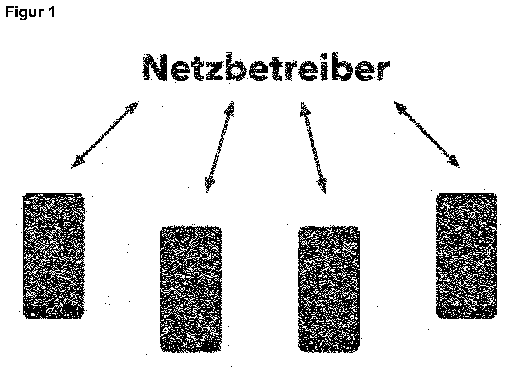

**Figur 1** zeigt den Stand der Technik, in welchem einzelne Smartphones mit einem Netzbetreiber verbunden sind, aber keine Verbindung zwischen den Smartphones besteht.

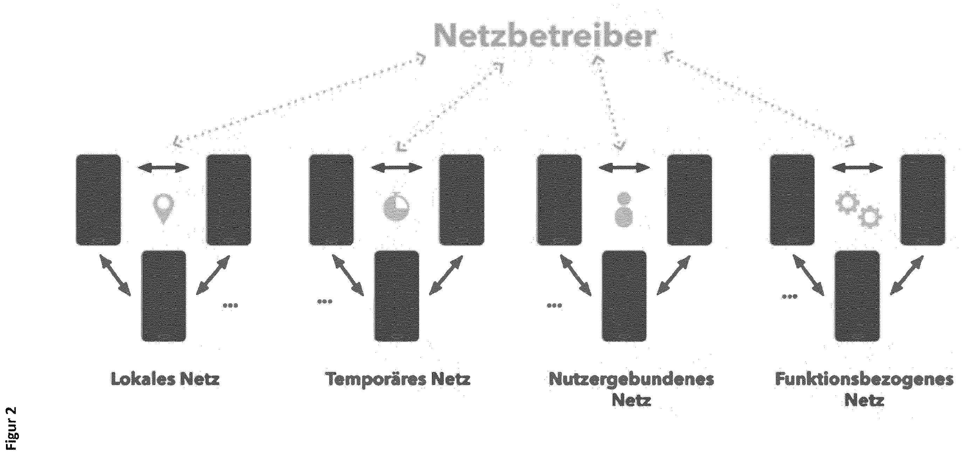

**Figur 2** zeigt Ausführungsformen der Erfindung, wobei ein Netz zwischen den einzelnen Smartphones gebildet wurde. Dieses Netz kann lokal begrenzt, zeitliche befristet und/oder auf einen bestimmten Personen/Gerätekreis oder funktionsabhängig begrenzt sein. In dieser vereinfachten Darstellung ist jedes Smartphone mit jedem anderen Smartphone verbunden.

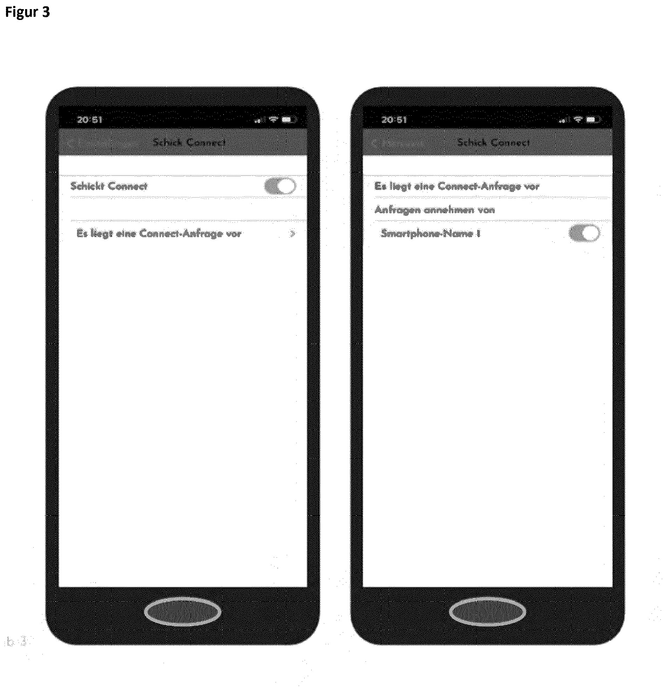

**Figur 3** zeigt eine mögliche Displaydarstellung für eine einfache Verbindung zwischen zwei Endgeräten.

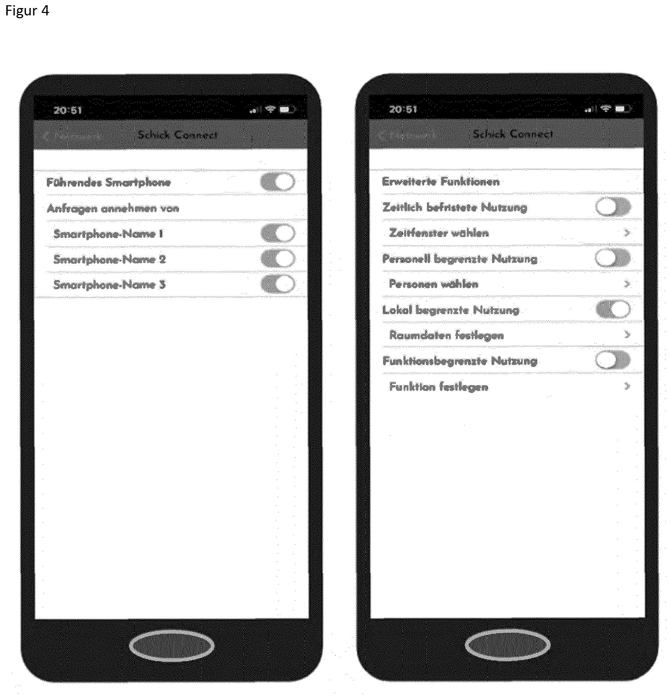

**Figur 4** zeigt eine mögliche Displaydarstellung für eine erweitere Verbindung zwischen zwei Endgeräten, wobei eine zeitliche Befristung durch die Eingabe von Zeitfenstern durch die Nutzer möglich ist. Des Weiteren ist eine personelle Begrenzung möglich, indem Nutzer mit ihrem Namen hinzugefügt werden. Eine räumliche Begrenzung ist möglich, in dem ein Radius oder ein Gebiet (z.B. durch PLZ, Ländernamen oder GPS) oder eine bestimmte Funktionsnutzung durch den Nutzer definiert wird.

## Patentansprüche

1. Verfahren zum Aufbau einer Kommunikationsverbindung zwischen mindestens zwei mobilen Vorrichtungen, wobei
a) eine erste mobile Vorrichtung ein Host ist und ein erstes Funksignal erzeugt, wobei das Funksignal einen ersten räumlichen Empfängerbereich generiert, der über eine erste Funktechnik gebildet wird;
b) eine zweite mobile Vorrichtung ein Teilnehmer ist und sich innerhalb des Empfängerbereichs des ersten Funksignals befindet, wobei die zweite mobile Vorrichtung das Funksignal detektiert;
c) die zweite mobile Vorrichtung eine manuelle oder automatische Anfrage zum Verbindungsaufbau an die erste mobile Vorrichtung übermittelt;
d) die erste mobile Vorrichtung die Anfrage manuell oder automatisch bestätigt, sodass sich eine erste Kommunikationsverbindung über das Funksignal zwischen der ersten und der zweiten mobilen Vorrichtung einstellt;
e) die erste mobile Vorrichtung im Zuge der ersten Kommunikationsverbindung eine Berechtigung erhält, eigene Daten mit der zweiten mobilen Vorrichtung über die erste Kommunikationsverbindung zu teilen und/oder anwendungsbezogene Steuerbefehle an die zweite mobile Vorrichtung über die erste Kommunikationsverbindung zu übermitteln.

2. Verfahren nach Anspruch 1
**dadurch gekennzeichnet, dass**
bei einer niedrigen Verbindungsqualität der ersten Kommunikationsverbindung und/oder in Abhängigkeit einer zu übertragenen Datengröße, die erste mobile Vorrichtung automatisiert ein zweites Funksignal erzeugt, wobei das zweite Funksignal über eine zweite Funktechnik gebildet wird und einen zweiten räumlichen Empfängerbereich erzeugt,
wobei
▪ die zweite mobile Vorrichtung sich innerhalb des Empfängerbereichs des zweiten Funksignals befindet, wobei die zweite mobile Vorrichtung das zweite Funksignal detektiert;
▪ die zweite mobile Vorrichtung eine automatische Anfrage zum Verbindungsaufbau an die erste mobile Vorrichtung übermittelt;
▪ die erste mobile Vorrichtung die Anfrage automatisch bestätigt, sodass sich eine zweite Kommunikationsverbindung zwischen der ersten und zweiten mobilen Vorrichtung einstellt;
▪ die erste mobile Vorrichtung eine Berechtigung im Zuge der zweiten Kommunikationsverbindung erhält, eigene Daten mit der zweiten mobilen Vorrichtung über die zweite Kommunikationsverbindung zu teilen und/oder anwendungsbezogene Steuerbefehle an die zweite mobile Vorrichtung über die zweite Kommunikationsverbindung zu übermitteln.

3. Verfahren nach Anspruch 2
**dadurch gekennzeichnet, dass**
bei einer niedrigen Verbindungsqualität der ersten und/oder zweiten Kommunikationsverbindung, eine dritte Kommunikationsverbindung zwischen der ersten und zweiten mobilen Vorrichtung über ein zentrales Netz eines Netzbetreibers oder eine andere zu diesem Zweck geeignete Funktechnik hergestellt wird.

4. Verfahren nach einem oder mehreren der vorhergehenden Ansprüche
**dadurch gekennzeichnet, dass**
für die Erzeugung eines Funksignals eine Funktechnik verwendet wird, die ausgesucht ist aus der Gruppe umfassend Bluetooth, WLAN, Z-Wave, ZigBee, Mesh, DECT, ULE.

5. Verfahren nach einem oder mehreren der vorhergehenden Ansprüche 2 - 4
**dadurch gekennzeichnet, dass**
die zweite mobile Vorrichtung über das erste Funksignal in einer ersten Kommunikationsverbindung mit der ersten mobilen Vorrichtung steht und eine dritte mobile Vorrichtung ein weiterer Teilnehmer ist und über das zweite Funksignal mit der ersten mobilen Vorrichtung in einer zweiten Kommunikationsverbindung steht.

6. Verfahren nach einem oder mehreren der vorhergehenden Ansprüche 3 - 5
**dadurch gekennzeichnet, dass**
die erste mobile Vorrichtung ortsabhängige, zeitabhängige, funktionsabhängige, und/oder personenabhängige Randbedingungen für die erste, zweite und/oder dritte Kommunikationsverbindung erzeugt.

7. Verfahren nach einem oder mehreren der vorhergehenden Ansprüche 3 - 6
**dadurch gekennzeichnet, dass**
die erste mobile Vorrichtung einen Abbruch der ersten, zweiten und/oder dritten Kommunikationsverbindung initiiert und/oder eine Anfrage für einen Verbindungsaufbau ablehnt, sofern die Randbedingungen nicht eingehalten werden.

8. Verfahren nach einem oder mehreren der vorhergehenden Ansprüche
**dadurch gekennzeichnet, dass**
eine mobile Vorrichtung ausgesucht ist aus der Gruppe umfassend Telekommunikationsendgerät, bevorzugt Smartphone, Laptop-PC, Tablet-Computer und Videospielkonsole, funkfähiges Multimediagerät, TV.

9. System zum Aufbau einer Kommunikationsverbindung zwischen mindestens zwei mobilen Vorrichtungen umfassend:
eine erste und eine zweite mobile Vorrichtung, wobei
a) die erste mobile Vorrichtung dazu konfiguriert ist,
▪ ein erstes Funksignal zu erzeugen, wobei das Funksignal einen ersten räumlichen Empfängerbereich und eine erste Funktechnik aufweist;
▪ eine Anfrage für einen Verbindungaufbau durch die zweite mobile Vorrichtung manuell oder automatisch zu bestätigen, sodass sich eine erste Kommunikationsverbindung zwischen der ersten und der zweiten mobilen Vorrichtung einstellen kann;
▪ eigene Daten mit der zweiten mobilen Vorrichtung nach einem Erhalt einer Berechtigung im Zuge der ersten Kommunikationsverbindung zu teilen und/oder anwendungsbezogene Steuerbefehle an die zweite mobile Vorrichtung über die erste Kommunikationsverbindung zu übermitteln;
b) die zweite mobile Vorrichtung innerhalb des Empfängerbereichs des ersten Funksignals positioniert ist und dazu konfiguriert ist,
▪ das erste Funksignal zu detektieren;
▪ eine manuelle oder automatische Anfrage für einen Verbindungsaufbau an die erste mobile Vorrichtung zu übermitteln;
▪ bereit zu sein, die Steuersignale der ersten mobilen Vorrichtung zu verarbeiten und optional Befehle auszuführen.

10. System nach Anspruch 9
**dadurch gekennzeichnet, dass**
die erste mobile Vorrichtung dazu konfiguriert ist, bei einer niedrigen Verbindungsqualität der ersten Kommunikationsverbindung und/oder in Abhängigkeit einer zu übertragenen Datengröße automatisiert ein zweites Funksignal zu erzeugen, wobei das zweite Funksignal eine zweite Funktechnik aufweist und einen zweiten räumlichen Empfängerbereich erzeugt und die zweite mobile Vorrichtung dazu konfiguriert ist, das zweite Funksignal zu detektieren, sodass eine zweite Kommunikationsverbindung zwischen der ersten und der zweiten mobilen Vorrichtung ermöglicht wird.

11. System nach einem oder beiden der vorhergehenden Ansprüche 9 und 10
**dadurch gekennzeichnet, dass**
die erste mobile Vorrichtung dazu konfiguriert ist, ortsabhängige, zeitabhängige, funktionsabhängige und/oder personen- und/oder geräteabhängige Randbedingungen für eine Kommunikationsverbindung zu erzeugen.

12. System nach Anspruch 11
**dadurch gekennzeichnet, dass**
die erste mobile Vorrichtung dazu konfiguriert ist, einen Abbruch einer Kommunikationsverbindung zu initiieren und/oder eine Anfrage für einen Verbindungsaufbau abzulehnen, sofern die Randbedingungen nicht eingehalten werden.

13. System nach einem oder mehreren der vorhergehenden Ansprüche 9 bis 12
**dadurch gekennzeichnet, dass**
auf der ersten und zweiten mobilen Vorrichtung ein Computerprogrammprodukt installiert vorliegt, welches dazu eingerichtet ist,
▪ manuelle Eingaben auf der ersten Vorrichtung in für die zweite Vorrichtung kompatible Steuerungsbefehle zu konvertieren und eine Übertragung der Steuerungsbefehle durch die erste Vorrichtung an die zweite Vorrichtung zu initiieren

14. System nach Anspruch 13
**dadurch gekennzeichnet, dass**
das Computerprogrammprodukt dazu eingerichtet ist, aufgebaute Kommunikationsverbindungen anhand von Algorithmen, bevorzugt Algorithmen der künstlichen Intelligenz, zu analysieren und zu beurteilen, ob die Randbedingungen eingehalten werden.
